# EUROPEAN PATENT SPECIFICATION

(11) **EP 2 690 558 B1**
(45) Date of publication and mention of the grant of the patent: **22.01.2020**
(21) Application number: 12760128.4
(22) Date of filing: 20.02.2012
(51) Int. Cl.: G06F 11/22, G06F 11/28, G06F 11/36, G06F 11/07, G06F 11/20, G06F 11/34, G06F 9/54, G06F 11/30

(54) **SEMICONDUCTOR DEVICE**
HALBLEITERBAUELEMENT
DISPOSITIF À SEMI-CONDUCTEUR

(30) Priority: 24.03.2011 JP 2011066093
(43) Date of publication of application: 29.01.2014
(73) Proprietor: Renesas Electronics Corporation, Tokyo 135-0061 (JP)
(72) Inventor: OTANI, Sugako, Kawasaki-shi Kanagawa 211-8668 (JP); KONDO, Hiroyuki, Kawasaki-shi Kanagawa 211-8668 (JP)
(74) Representative: Mewburn Ellis LLP
(86) International application number: PCT/JP2012/053927
(87) International publication number: WO 2012/127955

(56) References cited:
- JP-A- 2001 142 734
- JP-A- 2001 147 831
- JP-B2- 2 578 182
- US-A1- 2009 222 692
- US-B1- 6 728 258
- US-B1- 6 732 307
- US-B2- 7 272 759
- VERMEULEN B ET AL: "Core-based scan architecture for silicon debug", PROCEEDINGS INTERNATIONAL TEST CONFERENCE 2002. ITC 2002. BALTIMORE, MD, OCT. 7-10, 2002; [INTERNATIONAL TEST CONFERENCE], NEW YORK, NY : IEEE, US, 7 October 2002 (2002-10-07), pages 638-647, XP010609792, DOI: 10.1109/TEST.2002.1041815 ISBN: 978-0-7803-7542-0

## Description

This invention relates to a semiconductor device on which a plurality of central processing units are mounted.

In order to make development of software more efficient, many central processing units (CPUs) have an on-chip debugging function complying with JTAG (Joint Test Action Group) specifications or the like. The on-chip debugging function is a function for operating a CPU by inputting a command code through a dedicated interface and extracting resource information within a semiconductor chip. The on-chip debugging function includes a break function capable of stopping execution of a user program at a desired portion, a trace function capable of obtaining information on an internal bus at any time point during execution of a user program, and the like.

According to the technique described in Japanese Patent Laying-Open No. 2001-350648, a microcomputer provided with the on-chip debugging function described above is further provided with an internal state output circuit for externally outputting prescribed internal state information during execution of a user program and a terminal for outputting the internal state information.

Japanese Patent Laying-Open No. 6-214819 also includes the description similar to the document above. Specifically, a microcomputer described in this document is provided with an output circuit for externally outputting contents in an execute program counter and selecting a signal or the like input and output between a CPU and a functional module and externally outputting the same.

In recent years, in order to realize a low-power and high-performance system, a multi-processor in which a plurality of CPUs are mounted on the same LSI (Large Scale Integration) (a multi-core processor) has been developed. Debugging of a system on which a plurality of CPUs are mounted presents a new problem which is different from that in a system on which a single CPU is mounted.

For example, in debugging of a system on which a plurality of CPUs are mounted, break, step execution, trace, and the like are carried out for each CPU. Therefore, for efficient debugging, it is necessary to operate break and step execution of each CPU in coordination with each other and to know temporal relation of trace data of each CPU. Japanese Patent Laying-Open No. 2003-162426 describes a computer system including a control circuit for this purpose.

A method of connecting a set of debugging terminals and a plurality of CPUs to one another is also a problem specific to a multi-processor. According to an article by Ueda et al entitled "Virtualisation Techniques Supporting Debugging in Linux™ and Multi-Core Environments", published in Nikkei Electronics, 2 January 2006, pp 115-122, when debugging using a JTAG interface is assumed, four types of methods of connection between a JTAG port and each CPU core to be controlled are considered. Namely, there are an option between cascade connection or parallel switch connection and an option of having a function or the like for synchronization between CPU cores or not having the same. For example, Japanese Patent Laying-Open No. 2004-164367 discloses a technique for connecting a set of debugging terminals and a selected CPU to each other through a switch circuit (a selecting circuit) with a simplified configuration using a register.

Japanese Patent Laying-Open No. 2009-193305 discloses a technique capable of addressing a case where, in a multi-core LSI over which a plurality of CPUs are mounted on the same LSI, a certain CPU runs out of control to cause a shared bus to hang up while other CPUs are running normally. Specifically, the multi-core LSI in this document includes a plurality of CPUs coupled to a first shared bus, one or more modules coupled to a second shared bus, a shared bus controller coupled between the first shared bus and the second shared bus, for arbitrating an access to the module(s) by the CPUs, and a system controller that monitors whether or not a response signal to an access request signal of the CPU is output from the module to be accessed. The system controller outputs a pseudo response signal to the first shared bus via the shared bus controller to terminate the access by the CPU while accessing if the response signal is not output from the module to be accessed after the access request signal is output to the second shared bus from the shared bus controller and before a predetermined time elapses.

US 6 732 307 B1 discloses a system for performing a non-intrusive trace. It has a processor and debug circuit, which debug circuit includes a FIFO which is memory mapped and is capable of being accessed without affecting processor performance, and a trace data bus can transfer information from the processor clock cycle.

An article by B. Vermeulen et al entitled "Core-Based Scan Architecture for Silicon Debug", published in the Proceedings of the International Test Conference 2002, 7 October 2002, pages 638-647 discloses an on-chip system with multiple cores which activates scan chains to make a dump of the entire state of the chip at the moment the chip stops.

US 2009/222692 A1 discloses an integrated circuit with a plurality of delay resources, including both operations directed by debug software of the integrated circuit and operations directed by external debug hardware.

JP 2001 142734 A discloses a microprocessor with a serial interface for receiving a debugging program from a debugging tool.

JP 2001 147831 A discloses a microcomputer with a processor and a debug circuit. A dedicated link transfers information between the processor and the debut circuit.

JP 2 578182 B2 discloses a processor which is adapted to debug software by converting internal information to external information.

When a CPU has hung up for some reason, internal information of the hung up CPU cannot be extracted with the on-chip debugging function. Therefore, it becomes difficult to specify a location in a hung-up program.

In particular, in a case of a multi-processor on which a plurality of CPUs are mounted, debugging is more difficult than in a case of a single processor. The reason for this is that, in a multi-processor, task allocation changes each time and hence reproducibility of occurrence of hang-up is low; for example, hang-up occurs in a CPU different for each time of execution of a program. In addition, in a multi-processor, resource competition is likely because of access from each CPU or an amount of debugging is also great because a large-scale program is handled, which also makes debugging more difficult.

In a case of a single processor, a trace function is made use of in order to facilitate debugging in case of hang-up. In a case of a multi-processor, however, it is difficult to provide a trace function equivalent to that for a single processor with all processors, due to restriction imposed by a circuit size or a terminal.

Though Japanese Patent Laying-Open No. 2003-162426 and Japanese Patent Laying-Open No. 2004-164367 above aim to facilitate debugging of a multi-processor, they do not mention a case where a CPU has hung up. Though Japanese Patent Laying-Open No. 2009-193305 is directed to an invention in connection with a case where a CPU has hung up, it focuses on elimination of hang-up and does not provide means for facilitating debugging.

US6728258B1 discloses a multi-processor system interconnecting processor units, memory units, and input/output units connected to input/output devices via a crossbar switch having a plurality of ports, the transmitter of each processor unit has a circuit for determining a destination of an access request in the following manner. For an access request to a main memory, the access request is transferred to all processor units and one memory unit storing the data to be accessed. For an access request to a memory mapped register of the input/output device, the access request is broadcast to all input/output units. For an access request to a memory mapped register belonging to any one of the processor units, memory units, and input/output units, the access request is broadcast to all units via the crossbar switch.

US7272759B2 discloses a method, apparatus, and computer instructions for monitoring a device in a data processing system. A register associated with the device is accessed from a reduced function processor core through a connection between the register for the device and the reduced function processor core. The device is monitored using the value of the register.

According to the present invention there is provided a semiconductor device as specified in claim 1.

The semiconductor device according to the present invention may optionally be as specified in any one of claims 2 to 15.

The embodiments or examples of the following description which are not covered by the appended claims are considered as not being part of the invention.

According to the present invention, when the first central processing unit has hung up, the second central processing unit can be used to obtain an internal state of the first central processing unit, and hence debugging can be carried out more readily than in the conventional example.
In the drawing:
Fig. 1 is a block diagram showing a configuration of a microcomputer chip 100 according to a first embodiment of this invention.
Fig. 2 is a circuit diagram showing one example of hardware used for transferring internal information of a CPU 0 shown in Fig. 1.
Fig. 3 is a conceptual diagram for illustrating signal transmission between CPU cores in a microcomputer chip including 4 CPUs.
Fig. 4 is a list of a set of monitoring registers provided in a CPU 3.
Fig. 5 is a diagram for illustrating each monitoring register in Fig. 4.
Fig. 6 is a diagram showing one example of an address map of CPU 3 in Fig. 1.
Fig. 7 is a diagram for illustrating an on-chip debugging method in a case where CPU 0 has not hung up.
Fig. 8 is a diagram for illustrating an on-chip debugging method in a case where CPU 0 has hung up.
Fig. 9 is a diagram showing an example where a path for reading an internal state of each CPU in a microcomputer chip including 4 CPUs is in a ring configuration.
Fig. 10 is a diagram showing an example where a path for reading an internal state of each CPU in a microcomputer chip including 4 CPUs is in a bus configuration.
Fig. 11 is a diagram showing an example where a path for reading an internal state of each CPU in a microcomputer chip including 7 CPUs is in a tree configuration.

An embodiment of this invention will be described hereinafter in detail with reference to the drawings. It is noted that the same or corresponding elements have the same reference characters allotted and description thereof will not be repeated.

### <First Embodiment>

### [Configuration of Microcomputer Chip]

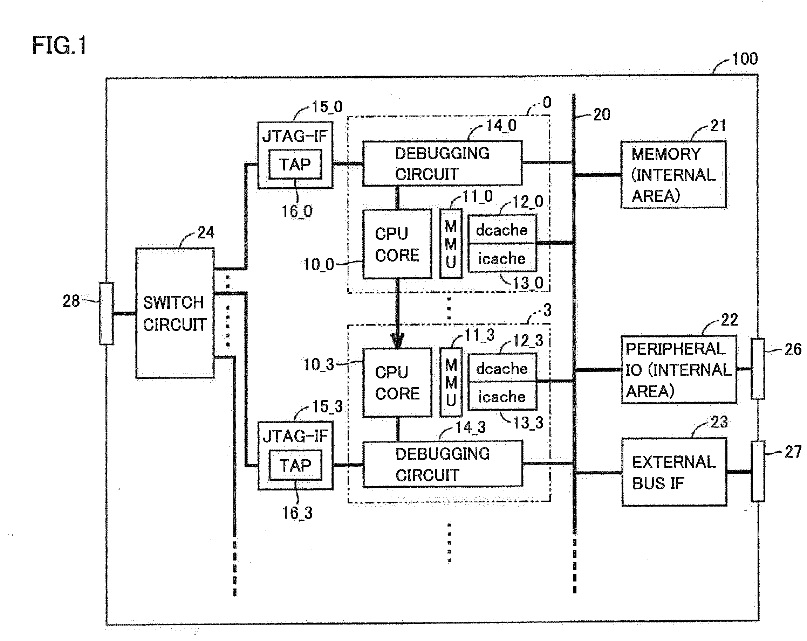

Fig. 1 is a block diagram showing a configuration of a microcomputer chip 100 according to a first embodiment of this invention. Referring to Fig. 1, microcomputer chip 100 includes a plurality of central processing units (CPUs), an internal memory 21, an input and output interface (peripheral 10) 22 for connecting microcomputer chip 100 to peripheral devices, and an external bus interface 23. These elements are connected to one another through an internal bus 20. It is noted that Fig. 1 shows as a representative, a CPU 0 and a CPU 3 among a plurality of CPUs provided in microcomputer chip 100.

Input and output interface 22 is connected to peripheral devices provided outside microcomputer chip 100 through an input and output port 26.

External bus interface 23 is connected to an external memory (such as a DRAM (Dynamic Random Access Memory)), an ASIC (Application Specific Integrated Circuit), and the like provided outside microcomputer chip 100 through an input and output port 27.

CPU 0 includes a core circuit (CPU core) 10_0, a memory management unit (MMU) 11_0, a primary cache (a command cache (icache) 13_0 and a data cache (dcache) 12_0), and a debugging circuit 14_0. Core circuit 10_0 is a core portion of a CPU executing a program stored in internal memory 21 or an external memory. Memory management unit 11_0 converts between a virtual address and a physical address. The primary cache serves for data access at a higher speed as a result of transfer of data in a part of a memory. Debugging circuit 14_0 is a dedicated circuit provided within a processor for realizing on-board debugging by JTAG ICE (In-circuit Emulator).

Similarly to CPU 0, CPU 3 also includes a core circuit 10_3, an MMU 11_3, a primary cache (12_3, 13_3), and a debugging circuit 14_3. It is noted that, as will be described later, core circuit 10_3 of CPU 3 is provided with a set of monitoring registers to which information on an internal state of CPU 0 is transferred during execution of a program. The set of monitoring registers is mapped in a memory space of CPU 3. Namely, an address is allocated to each register constituting the set of monitoring registers. By issuing a read command describing this allocated address as an operand address to CPU 3, contents held in the set of monitoring registers can be read.

Microcomputer chip 100 further includes a JTAG interface 15 provided in correspondence with each of the plurality of CPUs, a switch circuit 24, and a JTAG port 28. Fig. 1 representatively shows JTAG interfaces 15_0, 15_3 corresponding to CPUs 0, 3, respectively.

Each JTAG interface 15 has a dedicated controller called a TAP (Test Access Port) 16, and communication between a corresponding CPU and an external debugging device connected to JTAG port 28 is established through the TAP. JTAG interface 15 complies with specifications allowing only a specific TAP to communicate with an external debugging device. Switch circuit 24 switches connection between JTAG port 28 and each JTAG interface 15.

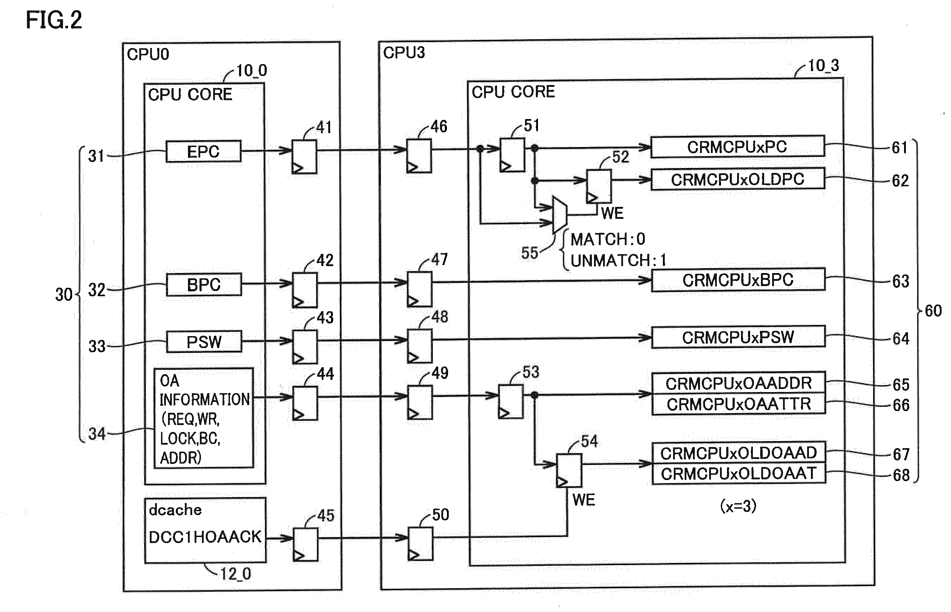

Fig. 2 is a circuit diagram showing one example of hardware used for transferring internal information of CPU 0 shown in Fig. 1.

Referring to Fig. 2, during execution of a program, internal information of CPU 0 is transferred to a set of monitoring registers 60 provided in core circuit 10_3 of CPU 3. Set of monitoring registers 60 is mapped in a memory space of CPU 3. The transferred internal state of CPU 0 is represented, for example, by a value of a set of special registers 30 such as an execute program counter used during execution of a program, and it is information corresponding to a CPU context saved at the time of an interrupt operation.

In a case of the first embodiment, as shown in Fig. 2, a value of an execute program counter (EPC, also simply denoted as PC) 31, a value of a backup program counter (BPC) 32, a value of a program status word (PSW) 33, information 34 on an operand access (OA), or the like is transferred to set of monitoring registers 60. Information on the operand access includes an operand access request (REQ), a write and read attribute (WR), a bus lock request attribute (LOCK), a byte control (BC), operand address information (ADDR), a bus acknowledge signal (DCC1HOAACK) to an operand access request, and the like. In a case of this embodiment, for reasons in terms of a bus configuration, a bus acknowledge signal (DCC1HOAACK) is output by data cache 12_0. It is noted that BPC 32 saves a value of PC when interrupt, trap, or exception occurs.

Though not illustrated in Fig. 2, internal information of memory management unit 11_0 in Fig. 1, that is, TLB (Translation Look-aside Buffer) entry (information on a physical address brought in correspondence with a virtual address) is also desirably transferred to set of monitoring registers 60.

The internal information of CPU 0 to be transferred is transferred to the set of monitoring registers through a plurality of flip-flops (holding circuits) in consideration of latency (delay time). In the case of Fig. 2, flip-flops 41 to 45 are provided in CPU 0 which is an information output side, and flip-flops 46 to 54 are provided in CPU 3 which is an information reception side.

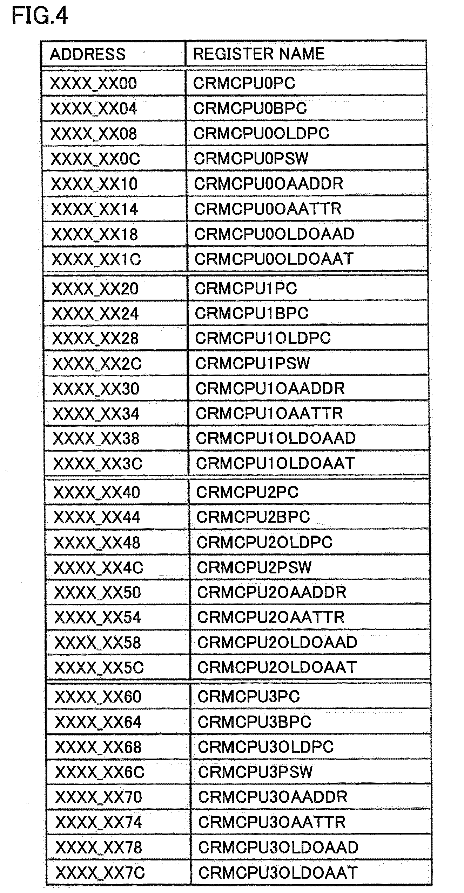

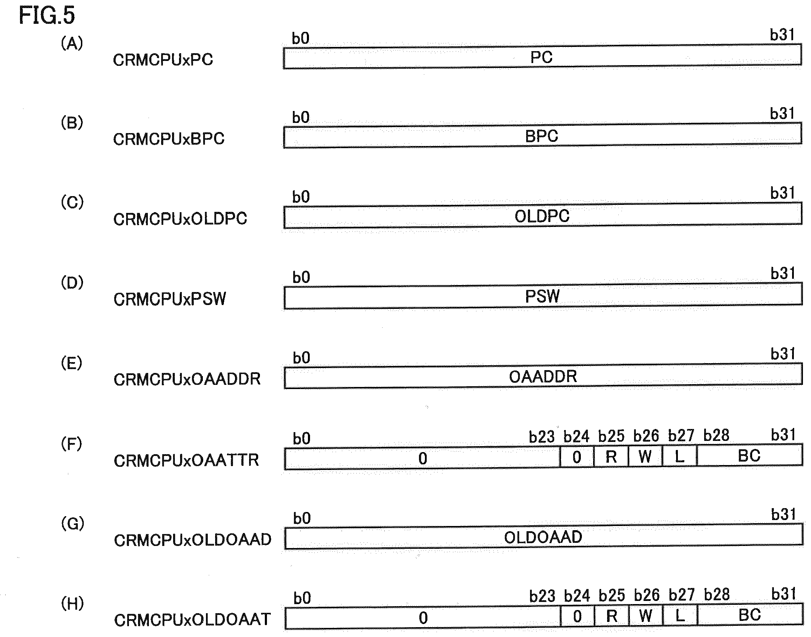

Details of a configuration of each of registers 61 to 68 constituting set of monitoring registers 60 will be described later with reference to Figs. 4 and 5. Here, values of registers 61, 63, 64, 65, and 66 are updated every clock cycle, whereas registers 62, 67, and 68 are not necessarily updated every clock cycle.

Register 62 holds a value of the execute program counter before update only when a value of the execute program counter (PC) is updated. For this purpose, flip-flop 52 is provided in a stage preceding register 62 and a comparator circuit 55 is provided. Comparator circuit 55 compares a value of an execute program counter held in flip-flop 51 with a new value of the execute program counter input every clock cycle. When these values match with each other, comparator circuit 55 outputs "0", and when they do not match, it outputs "1". Flip-flop 52 holds a value of the execute program counter every clock cycle, and updates a value of register 62 by outputting the held value of the execute program counter to register 62 only when the output from comparator circuit 55 is "1" (WE="1").

Only when attributes of an operand address and an operand access are updated, registers 67, 68 hold values before update respectively. For this purpose, flip-flop 54 is provided in a stage preceding registers 67, 68. Flip-flop 54 holds respective attributes of an operand address and an operand access every clock cycle. Flip-flop 54 updates contents in registers 67, 68 by outputting the attributes of the held operand address and operand access to registers 67, 68, respectively, when the bus acknowledge signal (DCC1HOAACK) is activated.

It is noted that set of monitoring registers 60 does not necessarily have to be provided within CPU core 10_3, however, in order to shorten a signal path for transmitting internal information of CPU 0, it is desirably provided within CPU core 10_3 as shown in Fig. 2. If set of monitoring registers 60 is provided outside CPU 3 and set of monitoring registers 60 and CPU 3 are connected to each other through bus 20, CPU 3 cannot access set of monitoring registers 60 when bus 20 hangs up. Alternatively, in order to avoid this problem, set of monitoring registers 60 and CPU 3 are connected to each other through a number of dedicated signal lines.

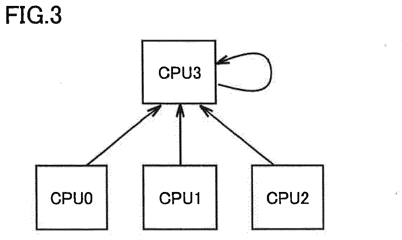

Fig. 3 is a conceptual diagram for illustrating signal transmission between CPU cores in a microcomputer chip including 4 CPUs, and shows an example where a path for reading an internal state of each CPU is in a tree configuration.

Referring to Fig. 3, each piece of internal information of CPUs 0, 1, 2 is transferred to the set of monitoring registers provided in CPU 3. In addition, a set of monitoring registers for holding internal information of CPU 3 itself is desirably provided within CPU 3. Since the set of monitoring registers provided in CPU 3 is mapped in the memory space of CPU 3, internal information of these CPUs 0 to 3 can collectively be output to the outside of the CPUs by using a memory damp function provided in a general debugger. Namely, simply by mapping a desired observation target in the memory space of CPU 3, the memory damp function can be used to observe these observation targets from the outside of the microcomputer chip. Modification on a debugger side such as an emulator or an emulator firm is not necessary.

It is noted that, in actually debugging a program, in an initial stage, only CPU 0 to CPU 2 desirably operate a program with CPU 3 being dedicated for monitoring. Then, it is efficient that, in a stage where debugging has proceeded to some extent, all of CPUs 0 to 3 are used to operate the program.

### [Details of Set of Monitoring Registers]

Fig. 4 is a list of the set of monitoring registers provided in CPU 3. A higher order bit "XXXX-XX" of an address shown in Fig. 4 indicates a specific address in a memory space.

Fig. 5 is a diagram for illustrating each monitoring register in Fig. 4. Referring to Figs. 4 and 5, registers CRMCPU0PC to CRMCPU3PC (register 61 in Fig. 2) hold values of the execute program counters (PCs) of CPUs 0 to 3 (32 bits: bits bO to b31), respectively.

Registers CRMCPUOBPC to CRMCPU3BPC (register 63 in Fig. 2) hold values of the backup program counters (BPC) of CPUs 0 to 3 (32 bits), respectively.

Registers CRMCPUOOLDPC to CRMCPU3OLDPC (register 62 in Fig. 2) hold values immediately before the execute program counters of CPUs 0 to 3 change to current values (OLDPC: 32 bits), respectively. In a case where a CPU hangs up, a command preceding by one or more the currently executed command is often a cause thereof, and in addition, in order to obtain program flow, it is important to hold an execute program counter history covering one or more stages.

Registers CRMCPUOPSW to CRMCPU3PSW (register 64 in Fig. 2) hold values of program status words (PSW) of CPUs 0 to 3 (32 bits), respectively.

Registers CMRCPUOOAADDR to CRMCPU3OAADDR (register 65 in Fig. 2) hold operand access addresses output from CPUs 0 to 3 (OAADDR: 32 bits), respectively.

Registers CRMCPUOOAATTR to CRMCPU3OAATTR (register 66 in Fig. 2) hold attributes of operand accesses output from CPUs 0 to 3, respectively (request R, write W, lock L, byte control BC). Specifically, a case of R=0 represents absence of request and a case of R=1 represents presence of a request. A case of W=0 represents a read request and a case of W=1 represents a write request. A value for W is valid only when R=1. A case of L=0 indicates not during a lock period or during an unlock request, and a case of L=1 indicates during a lock period or during a lock request. Byte control BC is a 4-bit byte control signal, and it is valid only when R=1.

Registers CRMCPUOOLDOAAD to CRMCPU3OLDOAAD (register 67 in Fig. 2) hold values of operand access addresses (OLDOAAD) (32 bits) preceding by one the current operand access addresses output from CPUs 0 to 3, respectively. In a case where a CPU hangs up, an operand access preceding by one or more the currently executed operand access is often a cause thereof. Therefore, it is important to hold an operand access address history covering one or more stages. Registers CRMCPUOOLDOAAT to CRMCPU3OLDOAAT (register 68 in Fig. 2) hold operand access attributes preceding by one the current operand access attributes (request R, write W, lock L, byte control BC) output from CPUs 0 to 3, respectively. In a case where a CPU hangs up, an operand access preceding by one or more the currently executed operand access is often a cause thereof. Therefore, it is important to hold an operand access attribute history covering one or more stages.

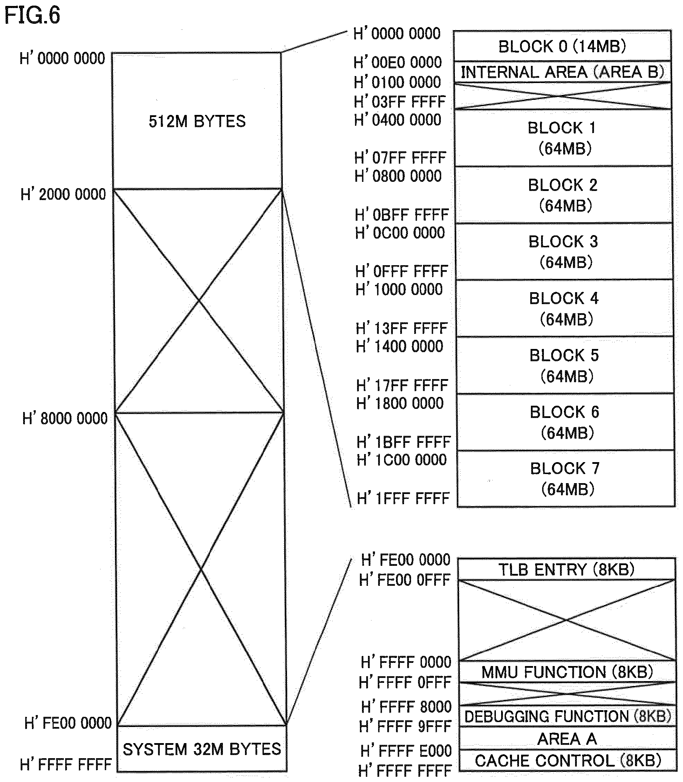

Fig. 6 is a diagram showing one example of an address map of CPU 3 in Fig. 1.

Referring to Fig. 6, 512 M bytes from H'0000_0000 to H'1FFF_FFFF are divided into blocks. An external area of 16 MB is allocated to each block. The external area makes an access through external bus interface 23 in Fig. 1. The internal memory and peripheral 10 22 in Fig. 1 are allocated to an internal area.

Thirty-two M bytes from H'FE00_00000 to H'FFFF_FFFF are allocated to a system area.

The set of monitoring registers in Fig. 4 can be allocated, for example, to an empty area not allocated to other resources, such as an area A within a system area or an area B which is a part of an internal area of 2 M bytes.

### [Description of Debugging Method]

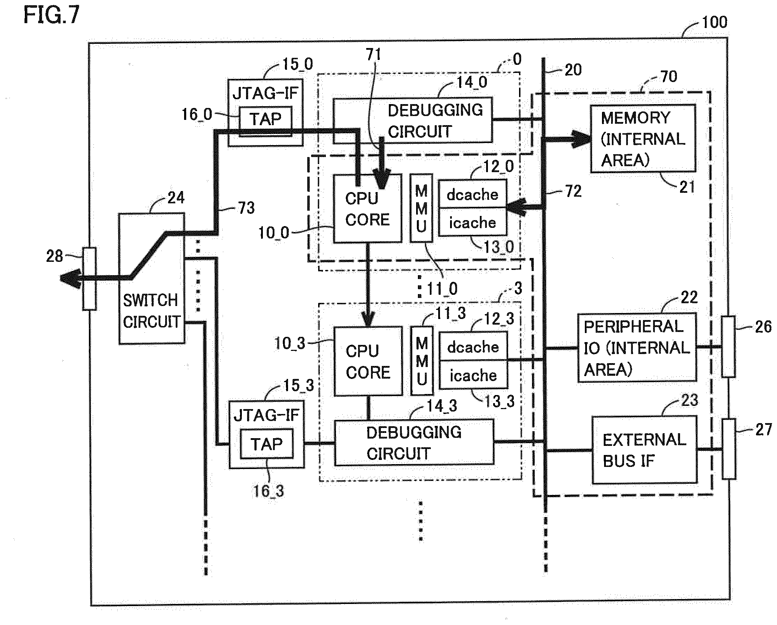

Fig. 7 is a diagram for illustrating an on-chip debugging method in a case where CPU 0 has not hung up.

Referring to Fig. 7, CPU core 10_0 itself as well as internal memory 21, input and output interface 22, and external bus interface 23 accessible from CPU core 10_0 are defined as a debugging target 70.

Initially, a control code reaches debugging circuit 14_0 from the outside of microcomputer chip 100. In a case where the control code in this case is an operand access, debugging circuit 14_0 issues such a command as load or store to CPU core 10_0 (a reference numeral 71 in Fig. 7). Upon receiving the command from debugging circuit 14_0, CPU core 10_0 accesses, for example, internal memory 21 which is an observation target (a reference numeral 72 in Fig. 7). A result of memory access by CPU core 10_0 is output to the outside through debugging circuit 14_0, interface 15_0, and JTAG port 28 (a reference numeral 73 in Fig. 7).

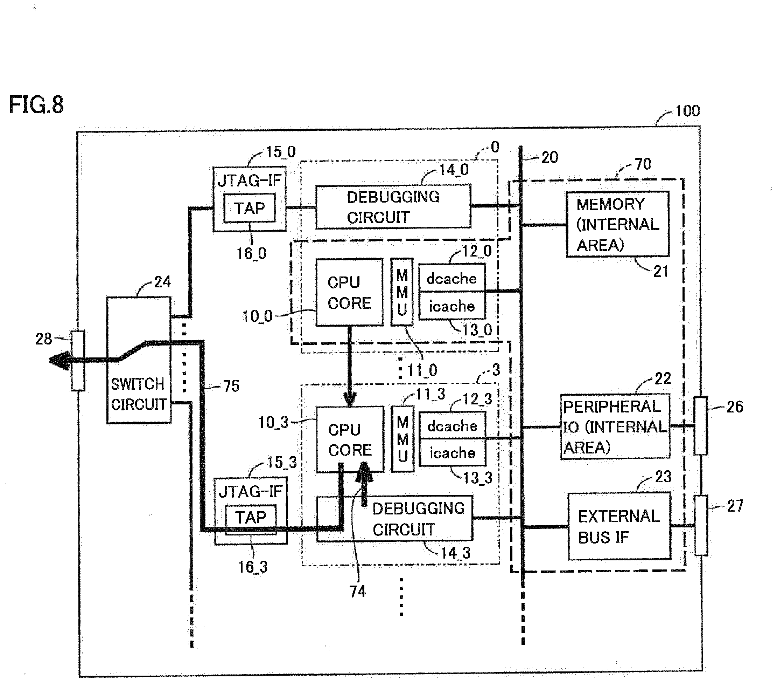

Fig. 8 is a diagram for illustrating an on-chip debugging method in a case where CPU 0 has hung up.

A cause of inability of a CPU core to operate is considered as a bus access path being in use in spite of supply of a command to a CPU. In this case, the CPU cannot complete preceding operand access processing and hangs up. As another cause, a case of hang-up by a bug in a CPU core or the like is considered. When CPU 0 hangs up, information cannot be output to the outside from a debugging target system 70.

As already described, in microcomputer chip 100 in the first embodiment, information representing an internal state of CPU 0 is transferred to the set of monitoring registers within CPU core 10_3. Then, the set of monitoring registers is mapped in the memory space of CPU 3. Therefore, debugging circuit 14_3 issues a command for loading contents in the set of monitoring registers to CPU core 10_3 (a reference numeral 74 in Fig. 8), so that information on hung-up CPU 0 can be output to the outside through JTAG interface 15_3 and JTAG port 28 (a reference numeral 75 in Fig. 8). Consequently, debugging can be carried out more readily than in the conventional example.

### <Second Embodiment>

In the first embodiment, an example where the path for reading an internal state is in a tree configuration such that information representing internal states of CPUs 0 to 3 is entirely transferred to the set of monitoring registers provided in CPU 3 has been shown. In a second embodiment, a variation of the path for reading an internal state of each CPU will be described. Since a path for reading an internal state of each CPU can freely be determined independently of a form of a connection network of CPUs (each topology of an on-chip bus and network-on-chip), an on-chip debugging method according to this invention is suited to an on-chip multi-processor. For example, even when a connection network is in a mesh configuration based on network-on-chip, a path for reading an internal state of each CPU can be simplified by adopting a tree structure.

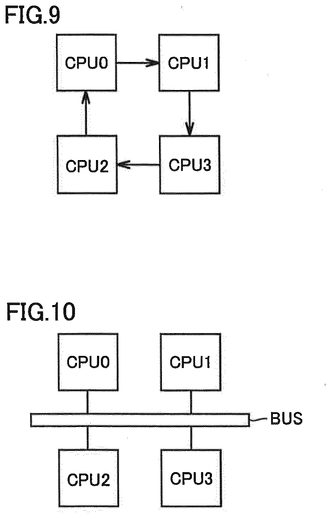

Fig. 9 is a diagram showing an example where a path for reading an internal state of each CPU in a microcomputer chip including 4 CPUs is in a ring configuration. In the example shown in Fig. 9, internal information of CPU 0 is transferred to a set of monitoring registers provided in CPU 1, internal information of CPU 1 is transferred to a set of monitoring registers provided in CPU 3, internal information of CPU 3 is transferred to a set of monitoring registers provided in CPU 2, and internal information of CPU 2 is transferred to a set of monitoring registers provided in CPU 0. Namely, a path for reading an internal state of each CPU is in a ring configuration.

Fig. 10 is a diagram showing an example where a path for reading an internal state of each CPU in a microcomputer chip including 4 CPUs is in a bus configuration. In the example shown in Fig. 10, internal information in each of CPUs 0 to 3 is transferred to a set of monitoring registers provided in at least one of CPUs 0 to 3 via a bus (BUS).

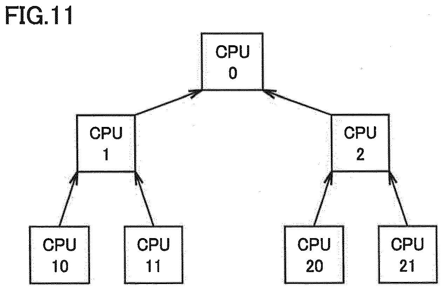

Fig. 11 is a diagram showing an example where a path for reading an internal state of each CPU in a microcomputer chip including 7 CPUs is in a tree configuration. Fig. 11 shows an example where a path for reading an internal state of each CPU is in a tree configuration. Specifically, each piece of internal information of CPUs 10, 11 is transferred to a set of monitoring registers provided in CPU 1, each piece of internal information of CPUs 20, 21 is transferred to a set of monitoring registers provided in CPU 2, and each piece of internal information of CPUs 1, 2 is transferred to a set of monitoring registers provided in CPU 0.

It should be understood that the embodiments disclosed herein are illustrative and non-restrictive in every respect. The scope of this invention is defined by the claims, as interpreted by the description and drawings.

### REFERENCE SIGNS LIST

0 to 3 CPU; 10 core circuit (CPU core); 11 memory management unit; 12 data cache; 13 command cache; 14 debugging circuit; 15 JTAG interface; 20 internal bus; 21 internal memory; 22 input and output interface; 23 external bus interface; 24 switch circuit; 26, 27 input and output port; 28 JTAG port; 30 set of special registers; 31 execute program counter; 33 program status word; 41 to 54 flip-flop; 60 set of monitoring registers; and 100 microcomputer chip.

## Claims

1. A semiconductor device, comprising:
first and second central processing units (CPU 0, CPU 3); and
a set of monitoring registers (60) provided inside or outside the second central processing unit, for receiving information representing an internal state of the first central processing unit (CPU0), whereby the semiconductor device is configured to transfer said information from the first central processing unit (CPU 0) during execution of a program, and whereby said set of monitoring registers is configured to hold the transferred information,
the set of monitoring registers (60) being mapped in a memory space of the second central processing unit (CPU 3);
wherein:
the first central processing unit (CPU 0) includes a first core circuit (10_0) for executing the program;
the second central processing unit (CPU 3) includes a second core circuit (10_3) for executing the program; and
the second central processing unit (CPU 3) is capable of reading the information held in the set of monitoring registers (60) by executing a command;
**characterized in that**:
the set of monitoring registers (60) includes a first monitoring register (62);
and **in that** the semiconductor device is further configured to update a value of the first monitoring register (62), only when a value transferred from the first central processing unit (CPU 0) has changed, with information before said change.

2. The semiconductor device according to claim 1, wherein
the second central processing unit (CPU 3) further includes:
a debugging circuit (14_3) causing the core circuit (10_3) of the second central processing unit (CPU 3) to output a value of the set of monitoring registers (60) mapped in the memory space and outputting the output value of the set of monitoring registers (60) to outside of the semiconductor device through a dedicated port (28), when a specific command is received from the outside of the semiconductor device through the dedicated port (28).

3. The semiconductor device according to claim 1, wherein
the first core circuit (CPU 0) has a set of special registers (30) used during execution of the program, and
the semiconductor device is further configured to transfer respective values of the set of special registers (30) to the set of monitoring registers (60) as information representing the internal state of the first central processing unit (CPU 0).

4. The semiconductor device according to claim 3, wherein
the set of special registers (30) includes an execute program counter (31).

5. The semiconductor device according to claim 3, wherein
the set of special registers (30) includes a register (34) holding an operand address.

6. The semiconductor device according to claim 1, wherein
the first central processing unit (CPU 0) includes a memory management unit (11) converting between a virtual address and a physical address, and
the semiconductor device is further configured to transfer information on the physical address brought in correspondence with the virtual address by the memory management unit (11) to the set of monitoring registers (60) as information representing the internal state of the first central processing unit (CPU 0).

7. The semiconductor device according to claim 1, wherein the second central processing unit (CPU 3) further includes a debugging circuit (14_3) outputting a value of the monitoring registers (60) to an outside of the semiconductor device.

8. The semiconductor device according to claim 1, wherein the second central processing unit (CPU 3) further includes a debugging circuit (14_3) causing the second core circuit (10_3) to read the information held in the set of monitoring registers (60) by issuing the command to the second core circuit (10_3).

9. The semiconductor device according to claim 1, wherein the set of monitoring registers (60) are provided within the second core circuit (10_3).

10. The semiconductor device according to claim 1, further comprising:
a port (28) connected to an outside of the semiconductor device; and
a switch circuit for switching connection between the port and the first central processing unit (CPU 0) and connection between the port (28) and the second central processing unit (CPU 3).

11. The semiconductor device according to claim 1, further comprising a port (28) connected to an outside of the semiconductor device,
wherein the first and second central processing units (CPU 0, CPU 3) are capable of communicating with the outside of the semiconductor device through the port (28) in compliance with JTAG (Joint Test Action Group) specifications.

12. The semiconductor device according to claim 1, wherein
the set of monitoring registers (60) further includes at least one or more second monitoring registers (61, 63, 64, 65, 66) which are different from the first monitoring registers (62), and
the semiconductor device is further configured to update the second monitoring registers (61, 63, 64, 65, 66) with a value transferred from the first central processing unit (CPU 0) every clock cycle.

13. The semiconductor device according to claim 12, wherein
the second monitoring registers (61, 63, 64, 65, 66) includes a register (61) which holds an execute program counter.

14. The semiconductor device according to claim 1, wherein
the set of monitoring registers (60) further includes at least one or more second monitoring registers (67, 68) which are different from the first monitoring register (62), and
the semiconductor device is further configured to update the second monitoring registers (67, 68), with respective held values of updated information transferred from the first central processing unit (CPU 0), while a specific signal received from the first central processing unit (CPU 0) is activated.

15. The semiconductor device according to claim 14, wherein the second monitoring registers (67, 68) includes a register (67) which holds an operand address.

## Patentansprüche

1. Halbleitervorrichtung, umfassend:
eine erste und eine zweite zentrale Verarbeitungseinheit (CPU 0, CPU 3); und
einen Satz von Überwachungsregistern (60), der innerhalb oder außerhalb der zweiten zentralen Verarbeitungseinheit bereitgestellt ist, zum Empfangen von Informationen, die einen internen Zustand der ersten zentralen Verarbeitungseinheit (CPU 0) darstellen, wobei die Halbleitervorrichtung konfiguriert ist, die Informationen aus der ersten zentralen Verarbeitungseinheit (CPU 0) während der Ausführung eines Programms zu übertragen, und wobei der Satz von Überwachungsregistern konfiguriert ist, die übertragenen Informationen zu speichern,
wobei der Satz von Überwachungsregistern (60) in einem Speicherplatz der zweiten zentralen Verarbeitungseinheit (CPU 3) abgebildet ist,
wobei:
die erste zentrale Verarbeitungseinheit (CPU 0) eine erste Kernschaltung (10_0) zum Ausführen des Programms umfasst;
die zweite zentrale Verarbeitungseinheit (CPU 3) eine zweite Kernschaltung (10_3) zum Ausführen des Programms umfasst; und
die zweite zentrale Verarbeitungseinheit (CPU 3) in der Lage ist, die in dem Satz von Überwachungsregistern (60) gespeicherten Informationen durch Ausführen eines Befehls auszulesen;
**dadurch gekennzeichnet, dass**:
der Satz von Überwachungsregistern (60) ein erstes Überwachungsregister (62) umfasst;
und dass die Halbleitervorrichtung ferner konfiguriert ist, einen Wert des ersten Überwachungsregisters (62) nur dann zu aktualisieren, wenn sich ein von der ersten zentralen Verarbeitungseinheit (CPU 0) übertragener Wert verändert hat, und zwar mit Informationen vor der Änderung.

2. Halbleitervorrichtung nach Anspruch 1, wobei
die zweite zentrale Verarbeitungseinheit (CPU 3) ferner Folgendes umfasst:
eine Fehlerbeseitigungsschaltung (14_3), die herbeiführt, dass die Kernschaltung (10_3) der zweiten zentralen Verarbeitungseinheit (CPU 3) einen Wert des Satzes von Überwachungsregistern (60), der in dem Speicherplatz abgebildet ist, ausgibt, und den Ausgabewert des Satzes von Überwachungsregistern (60) durch einen dedizierten Anschluss (28) nach außerhalb der Halbleitervorrichtung ausgibt, wenn durch den dedizierten Anschluss (28) ein spezifischer Befehl von außerhalb der Halbleitervorrichtung empfangen wird.

3. Halbleitervorrichtung nach Anspruch 1, wobei
die erste Kernschaltung (CPU 0) einen Satz von Sonderregistern (30) aufweist, die während der Ausführung des Programms verwendet werden, und
die Halbleitervorrichtung ferner konfiguriert ist, jeweilige Werte des Satzes von Sonderregistern (30) als Informationen, die den internen Zustand der ersten zentralen Verarbeitungseinheit (CPU 0) darstellen, an den Satz von Überwachungsregistern (60) zu übertragen.

4. Halbleitervorrichtung nach Anspruch 3, wobei
der Satz von Sonderregistern (30) einen Ausführungsprogrammzähler (31) umfasst.

5. Halbleitervorrichtung nach Anspruch 3, wobei
der Satz von Sonderregistern (30) ein Register (34) umfasst, das eine Operandenadresse hält.

6. Halbleitervorrichtung nach Anspruch 1, wobei
die erste zentrale Verarbeitungseinheit (CPU 0) eine Speicherverwaltungseinheit (11) umfasst, die eine virtuelle Adresse in eine physikalische Adresse umwandelt, und
die Halbleitervorrichtung ferner konfiguriert ist, Informationen auf der physikalischen Adresse, die durch die Speicherverwaltungseinheit (11) mit der virtuellen Adresse in Entsprechung gebracht wurde, als Informationen, die den internen Zustand der ersten zentralen Verarbeitungseinheit (CPU 0) darstellen, an den Satz von Überwachungsregistern (60) zu übertragen.

7. Halbleitervorrichtung nach Anspruch 1, wobei die zweite zentrale Verarbeitungseinheit (CPU 3) ferner eine Fehlerbeseitigungsschaltung (14_3) umfasst, die einen Wert der Überwachungsregister (60) an eine Außenseite der Halbleitervorrichtung ausgibt.

8. Halbleitervorrichtung nach Anspruch 1, wobei die zweite zentrale Verarbeitungseinheit (CPU 3) ferner eine Fehlerbeseitigungsschaltung (14_3) umfasst, die durch Erteilen des Befehls an die zweite Kernschaltung (10_3) herbeiführt, dass die zweite Kernschaltung (10_3) die in dem Satz von Überwachungsregistern (60) gespeicherten Informationen ausliest.

9. Halbleitervorrichtung nach Anspruch 1, wobei der Satz von Überwachungsregistern (60) in der zweiten Kernschaltung (10_3) bereitgestellt ist.

10. Halbleitervorrichtung nach Anspruch 1, ferner umfassend:
einen Anschluss (28), der mit einer Außenseite der Halbleitervorrichtung verbunden ist; und
eine Schalterschaltung zum Umschalten der Verbindung zwischen dem Anschluss und der ersten zentralen Verarbeitungseinheit (CPU 0) und der Verbindung zwischen dem Anschluss (28) und der zweiten zentralen Verarbeitungseinheit (CPU 3).

11. Halbleitervorrichtung nach Anspruch 1, ferner umfassend einen Anschluss (28), der mit einer Außenseite der Halbleitervorrichtung verbunden ist,
wobei die erste und zweite zentrale Verarbeitungseinheit (CPU 0, CPU 3) in der Lage sind, in Übereinstimmung mit JTAG(Joint Test Action Group)-Spezifikationen durch den Anschluss (28) mit der Außenseite der Halbleitervorrichtung zu kommunizieren.

12. Halbleitervorrichtung nach Anspruch 1, wobei
der Satz von Überwachungsregistern (60) ferner zumindest ein oder mehrere zweite Überwachungsregister (61, 63, 64, 65, 66) umfasst, die sich von den ersten Überwachungsregistern (62) unterscheiden, und
die Halbleitervorrichtung ferner konfiguriert ist, die zweiten Überwachungsregister (61, 63, 64, 65, 66) mit einem Wert zu aktualisieren, der jeden Taktzyklus von der ersten zentralen Verarbeitungseinheit (CPU 0) übertragen wird.

13. Halbleitervorrichtung nach Anspruch 12, wobei
die zweiten Überwachungsregister (61, 63, 64, 65, 66) ein Register (61) umfassen, das einen Ausführungsprogrammzähler beinhaltet.

14. Halbleitervorrichtung nach Anspruch 1, wobei
der Satz von Überwachungsregistern (60) ferner zumindest ein oder mehrere zweite Überwachungsregister (67, 68) umfasst, die sich von dem ersten Überwachungsregister (62) unterscheiden, und
die Halbleitervorrichtung ferner konfiguriert ist, die zweiten Überwachungsregister (67, 68) mit entsprechenden gespeicherten Werten aktualisierter Informationen zu aktualisieren, die von der ersten zentralen Verarbeitungseinheit (CPU 0) übertragen werden, während ein von der ersten zentralen Verarbeitungseinheit (CPU 0) empfangenes spezifisches Signal aktiviert wird.

15. Halbleitervorrichtung nach Anspruch 14, wobei die zweiten Überwachungsregister (67, 68) ein Register (67) umfassen, das eine Operandenadresse speichert.

## Revendications

1. Dispositif à semi-conducteur, comprenant :
des première et seconde unités de traitement centrales (CPU 0, CPU 3) ; et
un ensemble de registres de surveillance (60) prévus à l'intérieur ou à l'extérieur de la seconde unité de traitement centrale, pour recevoir des informations représentant un état interne de la première unité de traitement centrale (CPU 0), de telle sorte que le dispositif à semi-conducteur est configuré pour transférer lesdites informations à partir de la première unité de traitement centrale (CPU 0) pendant l'exécution d'un programme, et de telle sorte que ledit ensemble de registres de surveillance est configuré pour contenir les informations transférées,
l'ensemble de registres de surveillance (60) étant mappé dans un espace mémoire de la seconde unité de traitement centrale (CPU 3) ;
dans lequel :
la première unité de traitement centrale (CPU 0) comprend un premier circuit de cœur (10_0) pour exécuter le programme ;
la seconde unité de traitement centrale (CPU 3) comprend un second circuit de cœur (10_3) pour exécuter le programme ; et
la seconde unité de traitement centrale (CPU 3) est capable de lire les informations contenues dans l'ensemble de registres de surveillance (60) en exécutant une commande ;
**caractérisé en ce que** :
l'ensemble de registres de surveillance (60) comprend un premier registre de surveillance (62) ; et
**en ce que** le dispositif à semi-conducteur est en outre configuré pour mettre à jour une valeur du premier registre de surveillance (62) uniquement lorsqu'une valeur transférée à partir de la première unité de traitement centrale (CPU 0) a changé, avec des informations avant ledit changement.

2. Dispositif à semi-conducteur selon la revendication 1, dans lequel
la seconde unité centrale (CPU 3) comprend en outre :
un circuit de débogage (14_3) amenant le circuit de cœur (10_3) de la seconde unité de traitement centrale (CPU 3) à délivrer en sortie une valeur de l'ensemble de registres de surveillance (60) mappé dans l'espace mémoire et délivrant en sortie la valeur de sortie de l'ensemble de registres de surveillance (60) vers l'extérieur du dispositif à semi-conducteur via un port dédié (28), lorsqu'une commande spécifique est reçue depuis l'extérieur du dispositif à semi-conducteur via le port dédié (28).

3. Dispositif à semi-conducteur selon la revendication 1, dans lequel
le premier circuit de cœur (CPU 0) possède un ensemble de registres spéciaux (30) utilisés lors de l'exécution du programme, et
le dispositif à semi-conducteur est en outre configuré pour transférer des valeurs respectives de l'ensemble de registres spéciaux (30) à l'ensemble de registres de surveillance (60) en tant qu'informations représentant l'état interne de la première unité de traitement centrale (CPU 0) .

4. Dispositif à semi-conducteur selon la revendication 3, dans lequel
l'ensemble de registres spéciaux (30) comprend un compteur de programme d'exécution (31).

5. Dispositif à semi-conducteur selon la revendication 3, dans lequel
l'ensemble de registres spéciaux (30) comprend un registre (34) contenant une adresse d'opérande.

6. Dispositif à semi-conducteur selon la revendication 1, dans lequel
la première unité de traitement centrale (CPU 0) comprend une unité de gestion de mémoire (11) effectuant une conversion entre une adresse virtuelle et une adresse physique, et
le dispositif à semi-conducteur est en outre configuré pour transférer des informations sur l'adresse physique amenée en correspondance avec l'adresse virtuelle par l'unité de gestion de mémoire (11) à l'ensemble de registres de surveillance (60) en tant qu'informations représentant l'état interne de la première unité de traitement centrale (CPU 0).

7. Dispositif à semi-conducteur selon la revendication 1, dans lequel la seconde unité centrale (CPU 3) comprend en outre un circuit de débogage (14_3) délivrant en sortie une valeur des registres de surveillance (60) vers un extérieur du dispositif à semi-conducteur.

8. Dispositif à semiconducteur selon la revendication 1, dans lequel la seconde unité de traitement centrale (CPU 3) comprend en outre un circuit de débogage (14_3) amenant le second circuit de cœur (10_3) à lire les informations contenues dans l'ensemble de registres de surveillance (60). en envoyant la commande au second circuit de cœur (10_3).

9. Dispositif à semi-conducteur selon l'une quelconque des revendications précédentes, **caractérisé en ce que** l'ensemble de registres de surveillance (60) est prévu à l'intérieur du second circuit de cœur (10_3).

10. Dispositif à semi-conducteur selon la revendication 1, comprenant en outre :
un port (28) connecté à un extérieur du dispositif à semi-conducteur ; et
un circuit de commutation pour une commutation de connexion entre le port et la première unité de traitement centrale (CPU 0) et une connexion entre le port (28) et la seconde unité de traitement centrale (CPU 3).

11. Dispositif à semi-conducteur selon la revendication 1, comprenant en outre un port (28) connecté à un extérieur du dispositif à semi-conducteur,
dans lequel les première et seconde unités de traitement centrales (CPU 0, CPU 3) sont capables de communiquer avec l'extérieur du dispositif à semi-conducteur via le port (28) conformément aux spécifications JTAG (Joint Test Action Group).

12. Dispositif à semi-conducteur selon la revendication 1, dans lequel
l'ensemble de registres de surveillance (60) comprend en outre au moins un ou plusieurs seconds registres de surveillance (61, 63, 64, 65, 66) qui sont différents des premiers registres de surveillance (62), et
le dispositif à semi-conducteur est en outre configuré pour mettre à jour les second registres de surveillance (61, 63, 64, 65, 66) avec une valeur transférée depuis la première unité de traitement centrale (CPU 0) à chaque cycle d'horloge.

13. Dispositif à semi-conducteur selon la revendication 12, dans lequel
les seconds registres de surveillance (61, 63, 64, 65, 66) comprennent un registre (61) qui contient un compteur de programme d'exécution.

14. Dispositif à semi-conducteur selon la revendication 1, dans lequel
l'ensemble de registres de surveillance (60) comprend en outre au moins un ou plusieurs seconds registres de surveillance (67, 68) qui sont différents du premier registre de surveillance (62), et
le dispositif à semi-conducteur est en outre configuré pour mettre à jour les seconds registres de surveillance (67, 68) avec des valeurs contenues respectives d'informations transférées depuis la première unité de traitement centrale (CPU 0) pendant qu'un signal spécifique reçu de la première unité de traitement centrale (CPU 0) est activé.

15. Dispositif à semi-conducteur selon la revendication 14, dans lequel
les seconds registres de surveillance (67, 68) comprennent un registre (67) qui contient une adresse d'opérande.
